# EUROPEAN PATENT SPECIFICATION

(11) **EP 2 594 870 B1**
(45) Date of publication and mention of the grant of the patent: **08.05.2019**
(21) Application number: 11196279.1
(22) Date of filing: 30.12.2011
(51) Int. Cl.: F25D 3/11

(54) **Freezer apparatus**
Tiefkühlvorrichtung
Appareil de congélateur

(30) Priority: 17.11.2011 US 201113298321
(43) Date of publication of application: 22.05.2013
(73) Proprietor: Linde Aktiengesellschaft, 80331 München (DE)
(72) Inventor: Newman, Michael D., Hillsborough, NJ New Jersey 08844 (US); McCormick, Stephen A., Warrington, PA Pennsylvania 18976 (US)
(74) Representative: Gellner, Bernd

(56) References cited:
- EP-A1- 1 426 715
- WO-A2-2004/018945
- US-B2- 7 810 347

## Description

### Technical field of the present invention

The present embodiments relate to an apparatus for freezing products, such as food products, with cryogenic substances.

### Background of the present invention; prior art

In known individual quick frozen (IQF) freezer apparatus and processes, heat transfer in the process is limited because a driving force for convective heat transfer is employed with the use of conventional axial flow fan blades.

In certain cryogen freezers, a product surface area is constantly exposed to air flow from fans which serve to accelerate the freezing rate during the process. The rate at which the product is frozen is dependent upon the heat transfer coefficient of the fans used in the freezing process. To date, only axial flow fans have been used for the heat.

US 7 810 347 B2 discloses a freezer according to the preamble of claim 1.

### Disclosure of the present invention: object, solution, advantages

Starting from the disadvantages and shortcomings as described above and taking the prior art as discussed into account, an object of the present invention is to shorten the duration of the freezing process, thereby reducing the operation cost while at the same time improving product quality.

This object is accomplished by a freezer comprising the features of claim 1. Advantageous embodiments and expedient improvements of the present invention are disclosed in the dependent claims.

The present invention basically uses a freezer apparatus for a product, comprising:
- a housing having a space therein, and an inlet and an outlet in communication with the space;
- a conveyor having a first side for conveying the product through the space, and a second side opposite to the first side;
- an agitating apparatus disposed proximate the conveyor for contacting the conveyor at select intervals to agitate the conveyor and displace the product at the first side;
- *a* first longitudinal member disposed proximate the first side of the conveyor and having at least one hole extending therethrough;
- at least one circulation device disposed in the space proximate the first longitudinal member for directing a cryogenic substance through the at least one hole onto the product; and
- *a second longitudinal member disposed proximate the second side of the conveyor and having at least another one hole extending therethrough.*

According to an advantageous embodiment of the present invention, the at least one hole is in registration with the conveyor.

According to an expedient embodiment of the present invention, the first longitudinal member comprises an, in particular first, plate having a plurality of the holes therethrough.

According to a favoured embodiment of the present invention, the at least one hole has a diameter of 6 mm to 50 mm.

According to an advantageous embodiment of the present invention, the at least another one hole is in registration with the conveyor.

According to an expedient embodiment of the present invention, the second longitudinal member comprises a second plate having a plurality of the holes therethrough.

According to a favoured embodiment of the present invention, the at least another one hole has a diameter of 6 mm to 50 mm.

According to a preferred embodiment of the present invention, the cryogenic substance is selected from the group consisting of carbon dioxide (CO₂) and nitrogen (N₂).

According to an advantageous embodiment of the present invention, the conveyor comprises a mesh surface area through which the cryogenic substance can pass.

According to an expedient embodiment of the present invention, the agitating apparatus is disposed proximate the second side of the conveyor.

According to a favoured embodiment of the present invention, the agitating apparatus comprises a cam.

According to a preferred embodiment of the present invention, the circulation device comprises a fan.

According to an advantageous embodiment of the present invention, the product comprises a food product, in particular a cutlet, a fish piece, a fruit, a shrimp or a vegetable.

The present invention finally relates to the use of at least one freezer as described above for individual quick frozen (IQF) product processing.

By the present invention, a more aggressive heat transfer can be applied with impingement jets, thus the freezing process being of shorter duration, thereby reducing the cost to operate the system while at the same time improving product quality because the product is frozen more quickly than according to the prior art.

### Brief description of the drawings

For a more complete understanding of the present inventive embodiments and as already discussed above, there are several options to embody as well as to improve the teaching of the present invention in an advantageous manner. To this aim, reference may be made to the claims dependent on claim 1; further improvements, features and advantages of the present invention are explained below in more detail with reference to preferred embodiments by way of nonlimiting example and to the appended drawing figures taken in conjunction with the description of the embodiments, of which:
- Fig. 1: is a cross-sectional side view of an individual quick frozen (IQF) impingement freezer convective embodiment according to the present invention, being operated according to the process of the present invention; and
- Fig. 2: is an exploded view of a portion of a cross-section of the embodiment shown in Fig. 1.

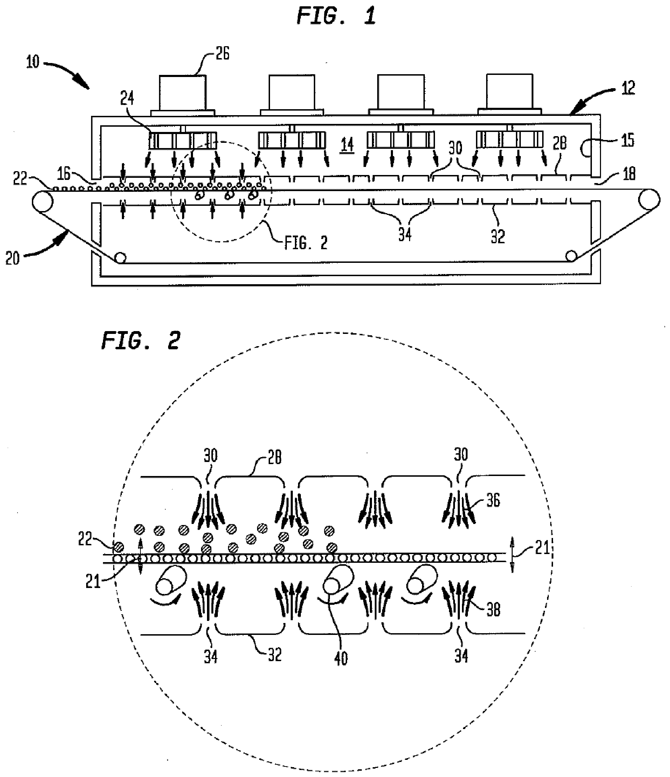

In the appended drawing figures, like equipment is labelled with the same reference numerals throughout the description of Fig. 1 and of Fig. 2.

### Detailed description of the drawings; best way of embodying the present invention

In order to avoid unnecessary repetitions, the following description regarding the features, characteristics and advantages of the present invention relates - unless otherwise stated - to all respective embodiments of the present invention.

Referring to Fig. 1 and to Fig. 2, a freezer apparatus embodiment is shown generally at 10 and includes a housing 12 or shell in which a space 14 or chamber is provided therein. The housing 12 includes an inlet 16 at one end and an outlet 18 at another end, the inlet and the outlet providing access to the space 14.

A conveyor belt 20 is operatively associated with the housing 12, in that the conveyor belt moves from the inlet 16 through the space 14 to the outlet 18 to transport a product or products 22 through the space 14 for freezing. The product 22 may be a food product.

The conveyor belt 20 is used for individual quick frozen (IQF) product processing, i.e. the conveyor belt 20 is an IQF belt which is constructed for agitation, vibration and/or undulation as indicated by arrow 21 along that portion of the belt 20 that transports the product 22 through the space 14.

The conveyor belt 20 can be selected to vibrate in a rapid manner so that the product 22 does not adhere to the belt or other of the product on the belt during the freezing process. This sort of vibrating or agitating effect of the belt exposes all surface area of the products 22 to the freezing process that occurs in the space 14. Conveyor belts that vibrate, agitate or undulate are known for freezers and examples of such are disclosed in US 7 296 431 B2, in US 7 810 347 B2 and in US 7 827 818 B2.

At least one fan 24 driven by a fan motor 26 is disposed such that the fan is in the space 14 for moving or propelling atmosphere in the space toward the conveyor belt 20. The conveyor belt 20 used for this embodiment would more than likely be an open mesh type of conveyor belt.

Also disposed in the space 14 is an upper impingement plate 28 which is disposed between an upper surface of the conveyor belt 20 and the at least one fan 24. The upper impingement plate 28 includes at least one and for most applications a plurality of impingement holes 30 through which the cryogen atmosphere is propelled to impact the product 22 moving along the conveyor belt 20. Each of the holes 30 may have a diameter of 6 mm to 50 mm, and are in registration with the conveyor belt 20.

It is also possible to have a lower impingement plate 32 disposed beneath a lower surface of the conveyor belt 20 and of a construction similar to that of the upper impingement plate 28. The lower impingement plate 32 includes at least one and for most applications a plurality of holes 34 through which the cryogen atmosphere circulated within the space 14 can pass through the holes 34 and the conveyor belt 20 for impacting the product 22.

Each of the holes 34 may have a diameter of 6 mm to 50 mm, and are in registration with the conveyor belt 20. Therefore, both of the impingement plates 28, 32 can be used in the space 14 so that maximum heat transfer for the products 22 can be provided by the impinging atmosphere shown by arrows 36, 38 being moved through the holes 30, 34, respectively, to contact the products 22. Impingement plates are known for freezers and an example of such is disclosed in US 6 263 680 B1.

The open mesh form of conveyor belt 20 provides for the movement of the impingement jets 36, 38 to pass through the conveyor belt. The impingement plates 28, 32 can be supported in the space 14 as shown in Fig. 1 by being mechanically fastened to an interior surface 15 of the housing 12.

A vibrating apparatus 40 is arranged to selectively contact the conveyor belt 20 and impart a force to the belt to vibrate the belt as shown by the arrow 21 so that the products 22 are displaced on the belt. The vibrating apparatus 40 can include a cam, as shown, or other member to impart the force to the conveyor belt 20 to cause same to reciprocate. Such displacement prevents the products 22 from adhering to each other and the belt 20 during the freezing process in the space 14.

For example, IQF agitation of the conveyor belt 20 can be used in combination with the cryogen impingement jet 36 being introduced through the upper impingement plate 28 to contact the product 22. Another embodiment calls for the IQF agitation of the belt 20 to be used in combination with the upper and lower impingement plates 28, 32. The lower impingement plate 32 can be used with the impingement jet 38 contacting the product 22.

Carbon dioxide (CO₂) or nitrogen (N₂) can be used as the cryogen for the jets 36, 38 of the present embodiments. If liquid nitrogen is used as the cryogen, the impingement jets 36, 38 will take the form of cryogen sprays, while using CO₂ as the cryogen will provide for a solid phase CO₂ in the impingement jets for contacting the products 22.

Use of the liquid nitrogen can bring a temperature of the space 14 down to minus 250°F [= minus 156°C], while use of CO₂ in the space can bring the temperature of the space down to minus 90°F [= minus 68°C]. The IQF agitation exposes hundred percent of the surface area of the products 22. The products 22 can be food products, such as for example shrimp, fish pieces, cutlets, fruits, vegetables, etc.

Lab testing has shown that the embodiments of the present invention will more than double the effective heat transfer coefficient that may be obtained in certain types of known mechanical or cryogen freezers. For example, known impingement freezers provide a heat transfer coefficient of approximately 18 Btu/(hr*ft²*F) [= approximately 102 W/(m²*K)], while known agitation or vibration freezers provide a heat transfer coefficient of approximately 12 to 12,5 Btu/(hr*ft²*F) [= approximately 68 to 71 W/(m²*K)].

In contrast, the freezer apparatus of the present embodiments provides a heat transfer coefficient of 25 Btu/(hr*ft²*F) [= approximately 142 W/(m²*K)], the particulars of which are shown in the following example of testing the apparatus embodiment 10 having the impingement plates 28, 32 and the agitation conveyor belt 20 as follows:

**INPUTS:**

| Equipment: freezer apparatus 10 | | | |
|---|---|---|---|
| Product: | Fish, Shrimp | | |
| Product dimension along length: | 1.97 in. | [= | 50 mm] |
| Product dimension along width: | 0.59 in. | [= | 15 mm] |
| Product thickness: | 0.59 in. | [= | 15 mm] |
| Space between rows: | 0.1 in. | [= | 2.54 mm] |
| Space between product pieces: | 0.1 in. | [= | 2.54 mm] |
| Number of items in row: | 52 | | |
| Product surface area: | 5.34 in.² | [= | 34.5 cm²] |
| Piece weight: | 0.021 lb. | [= | 9.52 g] |
| Product inlet temp: | 50°F | [= | 10°C] |
| Product outlet temp: | -15°F | [= | -26°C] |
| | | | |

| Freezer Details: | | | |
|---|---|---|---|
| Zone 1 (inlet) SP temperature: | -70°F | [= | -57°C] |
| Active length of freezer: | 10 ft. | [= | 3 m] |
| Freezer belt width: | 38 in. | [= | 96.5 cm] |

**RESULTS:**

| | | | | | | |
|---|---|---|---|---|---|---|
| Heat removal results: | Predicted heat removal: | | | 149.5 Btu/lb | [= 348 J/g] | |
| | Actual heat removal: | | | 148.8 Btu/lb | [= 346 J/g] | |

| | Inlet | | Freezer operational data | | Outlet | |
|---|---|---|---|---|---|---|
| Temperature gradient: | | -70 | -65 | -60 | -55 | °F |
| | [= | -57 | -54 | -51 | -48 | °C] |
| Heat transfer coefficients: | | 25.0 | 25.0 | 25.0 | 25.0 | Btu/(hr*ft²*F) |
| | [= | 142.0 | 142.0 | 142.0 | 142.0 | W/(m²*K)] |
| Product temperatures: | | 30.8 | 28.3 | 15.4 | -13.8 | °F |
| | [= | -0.7 | -2.1 | -9.2 | -25.4 | °C] |
| | | | | | | |
| Retention time: | | 2.37 min. | | | | |
| Belt loading: | | 2.1 lb/ft² | [= | 101 Pa] | | |
| | | | | | | |
| Heat transfer coefficient: | | 25 Btu/(hr*ft²*F) | [= | 142 W/(m²*K)] | | |

The freezer embodiments discussed above increase, and in certain instances as much as double, the overall heat transfer coefficient of a conventional cryogen freezer. Accordingly, because of the increased heat transfer rate of the present freezer embodiments, such embodiments can be constructed of a shorter length and smaller footprint than known cryogen freezers, yet still provide the same production rate and efficiency for the products being frozen.

This provides a cost savings for the equipment without sacrificing the fast rate of time that the products are frozen which also results in a higher quality frozen product.

It will be understood that the embodiments described herein are merely exemplary, and that one skilled in the art may make variations and modifications within the scope of the appended claims.

### List of reference numerals

- 10: freezer
- 12: housing or shell
- 14: space or chamber
- 15: interior surface of housing or shell 12
- 16: inlet
- 18: outlet
- 20: conveyor, in particular conveyor belt
- 21: arrow
- 22: product, in particular food product, for example cutlet, fish piece, fruit, shrimp, vegetable
- 24: circulation device, in particular fan
- 26: circulation device motor, in particular fan motor
- 28: longitudinal member, in particular first longitudinal member, for example upper impingement plate
- 30: hole, in particular impingement hole, through, in particular first, longitudinal member 28
- 32: longitudinal member, in particular second longitudinal member, for example lower impingement plate
- 34: hole, in particular impingement hole, through, in particular second, longitudinal member 32
- 36: cryogenic substance, in particular cryogen impingement jet, through hole 30
- 38: cryogenic substance, in particular cryogen impingement jet, through hole 34
- 40: agitating apparatus, in particular vibrating apparatus or undulating apparatus, for example cam

## Claims

1. A freezer (10) for a product (22), comprising:
- a housing (12) having a space (14) therein, and an inlet (16) and an outlet (18) in communication with the space (14);
- a conveyor (20) having a first side for conveying the product (22) through the space (14), and a second side opposite to the first side;
- an agitating apparatus (40) disposed proximate the conveyor (20) for contacting the conveyor (20) at select intervals to agitate the conveyor (20) and displace the product (22) at the first side;
***characterized by***
- *a* first longitudinal member (28) disposed proximate the first side of the conveyor (20) and having at least one hole (30) extending therethrough;
- at least one circulation device (24) disposed in the space (14) proximate the first longitudinal member (28) for directing a cryogenic substance (36) through the at least one hole (30) onto the product (22); *and*
- *a second longitudinal member (32) disposed proximate the second side of the conveyor (20) and having at least another one hole (34) extending therethrough.*

2. The freezer according to claim 1, wherein the at least one hole (30) is in registration with the conveyor (20).

3. The freezer according to claim 1 or 2, wherein the first longitudinal member (28) comprises a first plate having a plurality of the holes (30) therethrough.

4. The freezer according to at least one of claims 1 to 3, wherein the at least one hole (30) has a diameter of 6 mm to 50 mm.

5. The freezer according to *at least one of claims 1 to 4*, wherein the at least another one hole (34) is in registration with the conveyor (20).

6. The freezer according to *at least one of claims 1 to 5*, wherein the second longitudinal member (32) comprises a second plate having a plurality of the holes (34) therethrough.

7. The freezer according to at least one of claims *1* to *6*, wherein the at least another one hole (34) has a diameter of 6 mm to 50 mm.

8. The freezer according to at least one of claims 1 to *7*, wherein the cryogenic substance (36, 38) is selected from the group consisting of carbon dioxide (CO₂) and nitrogen (N₂).

9. The freezer according to at least one of claims 1 to *8*, wherein the conveyor (20) comprises a mesh surface area through which the cryogenic substance (36, 38) can pass.

10. The freezer according to at least one of claims 1 to *9*, wherein the agitating apparatus (40) is disposed proximate the second side of the conveyor (20).

11. The freezer according to at least one of claims 1 to *10*, wherein the agitating apparatus (40) comprises a cam.

12. The freezer according to at least one of claims 1 to *11*, wherein the circulation device (24) comprises a fan.

13. The freezer according to at least one of claims 1 to *12*, wherein the product (22) comprises a food product, in particular a cutlet, a fish piece, a fruit, a shrimp or a vegetable.

14. Use of at least one freezer (10) according to at least one of claims 1 to *13* for individual quick frozen (IQF) product processing.

## Patentansprüche

1. Gefriervorrichtung (10) für ein Produkt (22), Folgendes umfassend:
- ein Gehäuse (12), das einen Raum (14) darin und einen Einlass (16) und einen Auslass (18), die mit dem Raum (14) verbunden sind, aufweist;
- einen Förderer (20), der eine erste Seite zum Fördern des Produkts (22) durch den Raum (14) und eine zweite, der ersten Seite gegenüberliegende Seite aufweist;
- eine Rüttelvorrichtung (40), die neben dem Förderer (20) angeordnet ist, um den Förderer (20) in ausgewählten Intervallen zu berühren, um den Förderer (20) zu rütteln und das Produkt (22) auf der ersten Seite zu verlagern;
**gekennzeichnet durch**
- ein erstes Längselement (28), das neben der ersten Seite des Förderers (20) angeordnet ist und mindestens ein Loch (30) aufweist, das sich dort hindurch erstreckt;
- mindestens eine Zirkulationsvorrichtung (24), die in dem Raum (14) neben dem ersten Längselement (28) angeordnet ist, um eine kryogene Substanz (36) durch das mindestens eine Loch (30) auf das Produkt (22) zu leiten; und
- ein zweites Längselement (32), das neben der zweiten Seite des Förderers (20) angeordnet ist und mindestens ein weiteres Loch (34) aufweist, das sich dort hindurch erstreckt.

2. Gefriervorrichtung nach Anspruch 1, wobei das mindestens eine Loch (30) an dem Förderer (20) ausgerichtet ist.

3. Gefriervorrichtung nach Anspruch 1 oder 2, wobei das erste Längselement (28) eine erste Platte umfasst, die mehrere Löcher (30) dort hindurch aufweist.

4. Gefriervorrichtung nach einem der Ansprüche 1 bis 3, wobei das mindestens eine Loch (30) einen Durchmesser von 6 mm bis 50 mm aufweist.

5. Gefriervorrichtung nach einem der Ansprüche 1 bis 4, wobei das mindestens eine weitere Loch (34) an dem Förderer (20) ausgerichtet ist.

6. Gefriervorrichtung nach einem der Ansprüche 1 bis 5, wobei das zweite Längselement (32) eine zweite Platte umfasst, die mehrere Löcher (34) dort hindurch aufweist.

7. Gefriervorrichtung nach einem der Ansprüche 1 bis 6, wobei das mindestens eine weitere Loch (34) einen Durchmesser von 6 mm bis 50 mm aufweist.

8. Gefriervorrichtung nach einem der Ansprüche 1 bis 7, wobei die kryogene Substanz (36, 38) aus der Gruppe bestehend aus Kohlenstoffdioxid (CO₂) und Stickstoff (N₂) ausgewählt ist.

9. Gefriervorrichtung nach einem der Ansprüche 1 bis 8, wobei der Förderer (20) eine Netzfläche umfasst, durch die die kryogene Substanz (36, 38) verlaufen kann.

10. Gefriervorrichtung nach einem der Ansprüche 1 bis 9, wobei die Rüttelvorrichtung (40) neben der zweiten Seite des Förderers (20) angeordnet ist.

11. Gefriervorrichtung nach einem der Ansprüche 1 bis 10, wobei die Rüttelvorrichtung (40) eine Nocke umfasst.

12. Gefriervorrichtung nach einem der Ansprüche 1 bis 11, wobei die Zirkulationsvorrichtung (24) einen Lüfter umfasst.

13. Gefriervorrichtung nach einem der Ansprüche 1 bis 12, wobei das Produkt (22) ein Lebensmittelprodukt umfasst, insbesondere ein Kotelett, ein Stück Fisch, ein Obst, eine Garnele oder ein Gemüse.

14. Verwendung mindestens einer Gefriervorrichtung (10) nach einem der Ansprüche 1 bis 13 zur IQF-Produktverarbeitung (Individually Quick Frozen - schnelles Einzelgefrieren).

## Revendications

1. Congélateur (10) pour un produit (22), comprenant :
un boîtier (12) ayant un espace (14) en son sein, et une entrée (16) et une sortie (18) en communication avec l'espace (14) ;
un transporteur (20) ayant un premier côté pour transporter le produit (22) à travers l'espace (14), et un second côté opposé au premier côté ;
un appareil d'agitation (40) disposé à proximité du transporteur (20) pour entrer en contact avec le transporteur (20) à des intervalles choisis pour agiter le transporteur (20) et déplacer le produit (22) du premier côté ;
**caractérisé par**
un premier élément longitudinal (28) disposé à proximité du premier côté du transporteur (20) et ayant au moins un trou (30) s'étendant au travers ;
au moins un dispositif de circulation (24) disposé dans l'espace (14) à proximité du premier élément longitudinal (28) pour diriger une substance cryogénique (36) à travers l'au moins un trou (30) sur le produit (22) ; et
un second élément longitudinal (32) disposé à proximité du second côté du transporteur (20) et ayant au moins un autre trou (34) s'étendant au travers.

2. Congélateur selon la revendication 1, l'au moins un trou (30) étant en alignement avec le transporteur (20).

3. Congélateur selon la revendication 1 ou 2, le premier élément longitudinal (28) comprenant une première plaque ayant une pluralité des trous (30) au travers.

4. Congélateur selon au moins l'une des revendications 1 à 3, l'au moins un trou (30) ayant un diamètre de 6 mm à 50 mm.

5. Congélateur selon au moins l'une des revendications 1 à 4, l'au moins un autre trou (34) étant en alignement avec le transporteur (20).

6. Congélateur selon au moins l'une des revendications 1 à 5, le second élément longitudinal (32) comprenant une seconde plaque ayant une pluralité des trous (34) au travers.

7. Congélateur selon au moins l'une des revendications 1 à 6, l'au moins un autre trou (34) ayant un diamètre de 6 mm à 50 mm.

8. Congélateur selon au moins l'une des revendications 1 à 7, la substance cryogénique (36, 38) étant choisie dans le groupe constitué par le dioxyde de carbone (CO₂) et l'azote (N₂).

9. Congélateur selon au moins l'une des revendications 1 à 8, **caractérisé en ce que** le transporteur (20) comprend une surface de maille à travers laquelle la substance cryogénique (36, 38) peut passer.

10. Congélateur selon au moins l'une des revendications 1 à 9, l'appareil d'agitation (40) étant disposé à proximité du second côté du transporteur (20).

11. Congélateur selon au moins l'une des revendications 1 à 10, l'appareil d'agitation (40) comprenant une came.

12. Congélateur selon au moins l'une des revendications 1 à 11, le dispositif de circulation (24) comprenant un ventilateur.

13. Congélateur selon au moins l'une des revendications 1 à 12, le produit (22) comprenant un produit alimentaire, en particulier une escalope, un morceau de poisson, un fruit, une crevette ou un légume.

14. Utilisation d'au moins un congélateur (10) selon au moins l'une des revendications 1 à 13 pour le traitement de produits surgelés séparément (IQF).
